(19) Europäisches Patentamt
European Patent Office
Office européen des brevets

(11) Veröffentlichungsnummer: **0 226 955**
**A2**

(12) # EUROPÄISCHE PATENTANMELDUNG

(21) Anmeldenummer: **86117226.0**

(51) Int. Cl.[4]: **G 01 N 27/56**

(22) Anmeldetag: **10.12.86**

(30) Priorität: **11.12.85 DE 3543768**

(43) Veröffentlichungstag der Anmeldung:
**01.07.87 Patentblatt 87/27**

(84) Benannte Vertragsstaaten:
**DE FR GB NL**

(71) Anmelder: **Drägerwerk Aktiengesellschaft**
**Moislinger Allee 53-55**
**D-2400 Lübeck 1(DE)**

(71) Anmelder: **Max-Planck-Gesellschaft zur Förderung der Wissenschaften e.V.**
**Bunsenstrasse 10**
**D-3400 Göttingen(DE)**

(72) Erfinder: **Schlechtriemen, Gerhard-L., Dr. rer.nat. Dipl.-Che**
**Morkerke Strasse 12**
**D-2400 Lübeck 1(DE)**

(72) Erfinder: **Hötzel, Gerhard, Dipl.-Chem.**
**Taubenheimstrasse 108**
**D-7000 Stuttgart 50(DE)**

(72) Erfinder: **Weppner, Werner, Dr. Dipl.-Phys.**
**Weinbergweg 20A**
**D-7000 Stuttgart 80(DE)**

(54) **Galvanische Festkörperkette zur Messung des Sauerstoffpartialdrucks.**

(57) Eine galvanische Festkörperkette zur Messung des $O_2$-Partialdrucks, welche einen festen Ionenleiter enthält, der auf der einen Seite ein die Aktivität der beweglichen Komponente des Ionenleiters festlegende Referenzphase mit Ableiteelektrode und auf der anderen Seite eine gassensitive Phase mit Ableitelektrode enthält, zwischen denen ein Festelektrolyt vom Typ β''-Alumina angeordnet ist, soll hinsichtlich der Verwendbarkeit bei niedrigeren Temperaturen verbessert werden. Dies wird erfindungsgemäß dadurch erreicht, daß der feste Ionenleiter aus Pb-β''-Alumina besteht. Dieser feste Ionenleiter wird zweckmäßog mit einer Referenzphase aus Blei und einer gassensitiven Phase aus einer Blei-Sauerstoffverbindung kombiniert (Fig.).

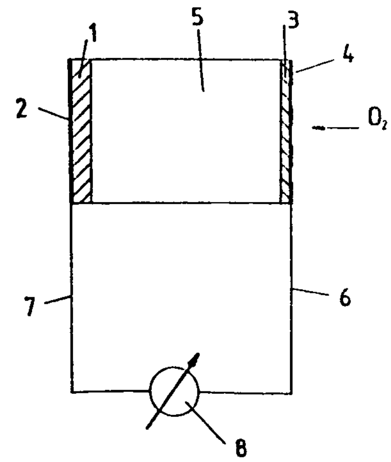


EP 0 226 955 A2

Anmelder: Drägerwerk AG, 2400 Lübeck/DE
Max Planck-Gesellschaft zur Förderung der Wissenschaften e.V., 3400 Göttingen/DE

# Galvanische Festkörperkette zur Messung des Sauerstoffpartialdrucks

Die Erfindung betrifft eine galvanische Festkörperkette zur Messung des $O_2$-Partialdrucks, welche einen festen Ionenleiter enthält, der auf der einen Seite eine die Aktivität der beweglichen Komponente des Ionenleiters festlegende Referenzphase mit Ableitelektrode und auf der anderen Seite eine gassensitive Phase mit Ableitelektrode enthält, zwischen denen ein Festelektrolyt vom Typ ß"-Alumina angeordnet ist.

Zur Bestimmung von Sauerstoffpartialdrücken durch Messung der elektromotorischen Kräfte galvanischer Festkörperketten ist es bekannt, eine stabilisiertes Zirkondioxid als festen Sauerstoffionenleiter enthaltende galvanische Festkörperkette einzusetzen. Eine

solche Festkörperkette, die als Lambda-Meßsonde in der Abgasströmung von Verbrennungskraftmaschinen verwendet wird, ist in der Literaturstelle "Adv. Electrochem. Eng. Vol. 10, Hrsg. Ch. Gerischer, C.W. Tobias, Seite 1 - 90, Verlag: Wiley & Sons, New York, 1977" beschrieben. Die Lambda-Sonde enthält einen Festelektrolyten, der mit einer Referenzelektrode, z.B. Palladium/Palladiumoxid und mit einer gassensitiven Meßelektrode aus einer porösen Platinschicht in Verbindung steht.

Eine solche galvanische Festkörperkette ermöglicht den Aufbau von Sauerstoffsensoren, die bei höherer Temperatur zwischen 700 und 1000°C mit hinreichend großer Ansprechgeschwindigkeit arbeiten.

Diese zur $O_2$-Partialdruckmessung bereits bekannte Festkörperkette, sowie die zur Gruppe der ß-Alumina-Festelektrolyte gehörenden Ionenleiter (vergl. die nicht vorveröffentlichte DE-OS 35 16 315.1), zeigen bei niedrigen Temperaturen keine hinreichende Ansprechgeschwindigkeit.

Die Erfindung geht von der Aufgabenstellung aus, eine galvanische Festkörperkette anzugeben, die bei niedriger Temperatur, beispielsweise etwa 300°C, bereits eine hinreichende Ansprechgeschwindigkeit aufweist und die

zur Messung von Sauerstoffpartialdrücken in gasförmigen oder festen Medien verwendet werden kann. Die Lösung dieser Aufgabenstellung besteht darin, daß der feste Ionenleiter aus Pb-ß"-Alumina besteht. Vorteilhaft können dabei die Referenzphase aus Blei und die gassensitive Phase aus einer Bleisauerstoffverbindung ($PbO_x$) bestehen. Eine zweckmäßige Ausbildung enthält eine gassensitive Phase aus Bleioxid (PbO). Es sind aber auch andere Referenz- und gassensitive Phasen möglich.

Eine solche Festkörperkette ist somit wie nachfolgend angegeben aufgebaut:

| | | | | | |
|---|---|---|---|---|---|
| Ableit-elektrode | Pb ′ | Pb-ß"-Alumina | $PbO_x$ ″ | Ableit-elektrode | Meßmedium/ $P_{O_2}$ |

Der feste Ionenleiter besteht aus Pb-ausgetauschtem ß"-Alumina, d.h. $Pb^{2+}$-Ionen liegen hauptsächlich als bewegliche Kationen im Festelektrolyten vor und bewirken bereits bei niedriger Temperatur eine deutlich ausgeprägte Ionenleitfähigkeit, wie sie für derartige Anwendungen hinreichend ist.

Der Festelektrolyt gehört zur Unterfamilie der ausgetauschten ß"-Alumina-Ionenleiter, bei denen zweiwertige Metallkationen anstelle der in der "Muttersubstanz"

Na-ß-Alumina vorhandenen einwertigen $Na^{+}$-Ionen die ionische Leitfähigkeit bewirken. Die bei den niedrigen Temperaturen beobachtete Leitfähigkeit dieses Pb-ß"-Alumina ist überraschenderweise hoch, weil der Austausch der einwertigen $Natrium^{+}$-Ionen in der Muttersubstanz gegen die zweiwertigen $Pb^{2+}$-Ionen zunächst erwarten läßt, daß die Ionensorte mit der höheren Ladung aufgrund der stärkeren Bindungskräfte unbeweglicher ist.

Der Festelektrolyt ist an seiner einen Stirnfläche (I') in Kontakt mit einer Referenzelektrode von definierter Bleiaktivität zweckmäßig aus reinem Blei. Auf der gegenüberliegenden Stirnfläche (I'') des Festelektrolyten befindet sich eine dünne Schicht aus einer Blei-Sauerstoffverbindung, allgemein mit $PbO_x$ bezeichnet, als gassensitive Phase, die zusammen mit einer Ableitelektrode die Meßelektrode der galvanischen Festkörperkette bildet.

Die Funktion dieser bevorzugt als Dünnschicht ausgebildeten gassensitiven Schicht in der Festkörperkette besteht grundsätzlich darin, daß die im Meßmedium durch den Gehalt der nachzuweisenden Komponente definierte Aktivität (Partialdruck) mit der Aktivität derjenigen Komponente dieser sensitiven Phase verknüpft ist, die identisch ist mit der die mobilen Ionen des

Festelektrolyten ausbildenden Komponente. Dadurch wird bei der Sauerstoffpartialdruckmessung an der Phasengrenze zwischen dem Festelektrolyten (Pb-ß"-Alumina) und der gassensitiven Schicht eine eindeutig durch den $O_2$-Partialdruck in der Gasphase festgelegte Bleiaktivität eingestellt. Diese kann über eine stromlose Potentialdifferenzmessung zwischen den beiden Ableitelektroden relativ zur Referenzaktivität bestimmt werden und bildet ein Maß für den zu messenden Sauerstoffpartialdruck. Neben thermodynamisch stabilen Phasen ist ferner die Verwendung metastabiler Phasen zugelassen, die auch außerhalb des thermodynamischen Gleichgewichts zwischen sensitiver Phase und Gasphase eine der Partialdruckänderung des Meßmediums ($O_2$) in gasförmiger (oder flüssiger) Phase zugeordnete Pb-Aktivitätsänderung zeigen.

Die in der Regel als binäre Verbindung gewählte sensitive Phase "antwortet" auf eine Änderung der Aktivität der nachzuweisenden Komponente im Meßmedium mit entsprechenden Aktivitätsänderungen ihrer Komponenten. Die als gassensitive Phasen in Frage kommenden Verbindungen sind meist ionischer bzw. ionogener Natur, d.h. neben meist nur einer Ionensorte (Anion oder Kation), die insbesondere bei höheren Temperaturen als beweglich angesehen werden kann und die zu einer ionischen Teilleitfähigkeit führt, sind auch intrinsische elektronische Ladungsträger (Elektronen oder Löcher) - allerdings anteilmäßig in der Regel nur in geringem Maße - an der Gesamtleitfähigkeit beteiligt. Da im Falle der Beweglichkeit einer Ionenteilchensorte in der gassensitiven Phase bei der zum Stöchiometrieausgleich führenden chemischen Diffusion, wie oben erläutert, die Elektroneutralität des Nettokomponententransports nur durch die gleichzeitig ablaufende Wanderung von elektronischen Störstellen gewährleistet wird, ist die Zeit bis zur Gleichgewichtseinstellung der Komponentenaktivität in sensitiven Phasen mit geringen Konzentrationen elektronischer Störstellen sehr groß.

Bleioxid (PbO) kann als "Idealfall" eines Mischleiters angesehen werden, weil neben der Ionenleitung noch ca. 50 % anteilig vorhandene intrinsische Elektronenleitfähigkeit vorliegt. Dies bildet die Voraussetzung für besonders schnelle Aktivitätseinstellungen der Komponenten im Bleioxid, die durch Sauerstoffpartialdruckänderungen in der mit dem Bleioxid in Kontakt stehenden Gasphase ausgelöst werden.

In der Zeichnung ist ein Ausführungsbeispiel des Gegenstandes der Erfindung schematisch dargestellt.

Die Festkörperkette enthält auf der einen Seite eine Referenzphase 1 mit definierter Bleiaktivität, hier reines Blei, die mit einer Ableitelektrode 2 kontaktiert ist. Auf der anderen Seite ist eine als Dünnschicht ausgebildete gassensitive Phase 3 aus einer Bleisauerstoffverbindung, hier PbO, vorhanden, welche mit einer gitterförmigen Ableitelektrode 4 verbunden ist. Die Ableitelektroden 2,4 bestehen vorzugsweise aus Platin. Zwischen der Referenzphase 1 und der gassensitiven Phase 3 ist ein Festelektrolyt 5 aus Pb-ß"-Alumina angeordnet.

Die beiden Ableitelektroden 2,4 sind über Verbindungsleitungen 6,7 mit einem hochohmigen mV-Meter 8 verbunden.

## Ansprüche

1. Galvanische Festkörperkette zur Messung des $O_2$-Partialdrucks, welche einen festen Ionenleiter enthält, der auf der einen Seite eine die Aktivität der beweglichen Komponente des Ionenleiters festlegende Referenzphase mit Ableitelektrode und auf der anderen Seite eine gassensitive Phase mit Ableitelektrode enthält, zwischen denen ein Festelektrolyt vom Typ ß"-Alumina angeordnet ist, dadurch gekennzeichnet, daß der feste Ionenleiter aus Pb-ß"-Alumina besteht.

2. Galvanische Festkörperkette nach Anspruch 1, dadurch gekennzeichnet, daß die Referenzphase aus Blei und die gassensitive Phase aus einer Blei-Sauerstoffverbindung ($PbO_x$) bestehen.

3. Galvanische Festkörperkette nach Anspruch 2, dadurch gekennzeichnet, daß die gassensitive Phase aus Bleioxid (PbO) besteht.

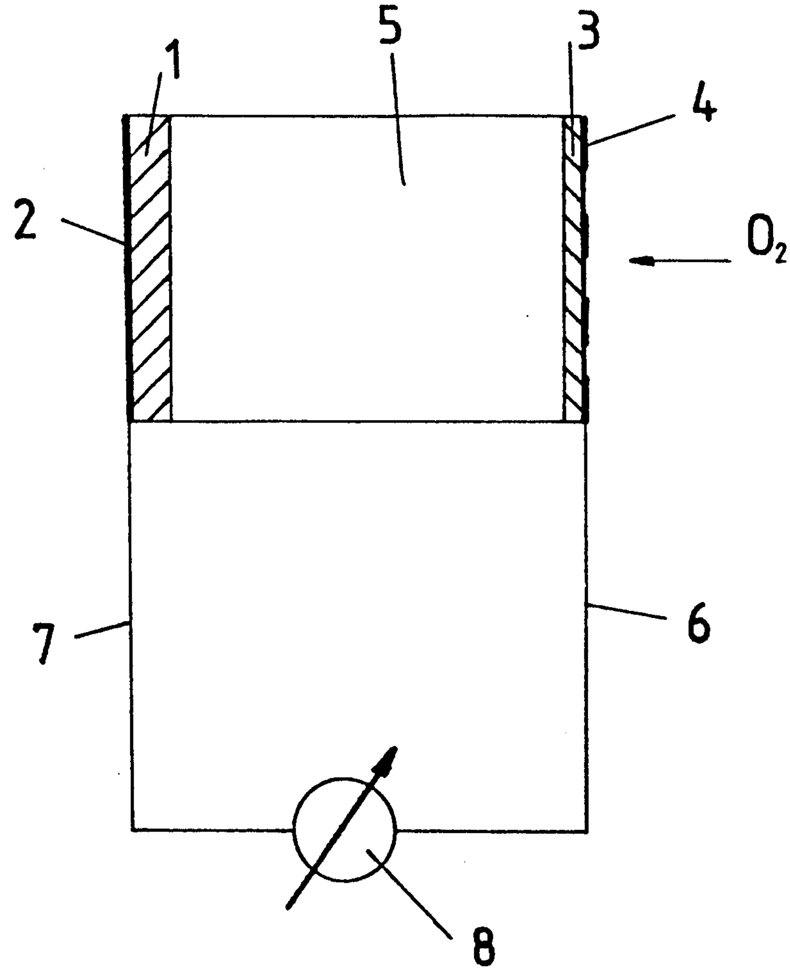

1
2
3
4
5
$O_2$
6
7
8